(19)

Europäisches
Patentamt
European
Patent Office
Office européen
des brevets

(11) **EP 2 392 444 A1**

(12) **EUROPEAN PATENT APPLICATION**
published in accordance with Art. 153(4) EPC

(43) Date of publication:
**07.12.2011 Bulletin 2011/49**

(21) Application number: **10735953.1**

(22) Date of filing: **02.02.2010**

(51) Int Cl.:
***B29C 45/16*** *(2006.01)*   ***C09D 5/02*** *(2006.01)*
***C09D 7/12*** *(2006.01)*   ***C09D 201/00*** *(2006.01)*

(86) International application number:
**PCT/JP2010/051419**

(87) International publication number:
**WO 2010/087493 (05.08.2010 Gazette 2010/31)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **02.02.2009 JP 2009021359**

(71) Applicants:
• **Autoliv Development AB
447 83 Vårgårda (SE)**
• **Fujikura Kasei Co., Ltd.
Tokyo 174-0046 (JP)**

(72) Inventors:
• **SASAOKA Kunio
Yokohama-shi
Kanagawa 222-0033 (JP)**

• **TAGUCHI Kazuhisa
Yokohama-shi
Kanagawa 222-0033 (JP)**
• **MATSUURA Takumi
Yokohama-shi
Kanagawa 222-0033 (JP)**
• **KAKIYA Masaharu
Yokohama-shi
Kanagawa 222-0033 (JP)**
• **KATO Tsuyoshi
Kitakatsushika-gun
Saitama 340-0203 (JP)**

(74) Representative: **Müller Verweyen
Patentanwälte
Friedensallee 290
22763 Hamburg (DE)**

(54) **AQUEOUS COATING AGENT**

(57)    To allow the formation of a satisfactory coating film by an in-mold coating process and to solve the problem of organic solvent disposal, the present invention provides a coating agent for use in an in-mold coating process in which a coating agent is applied to an inner wall of a cavity within a mold to form a coated film, and a filler material is then injected into a gap between this coated film and an object to be treated, thereby forming a coat formed of the filler material on the surface of the object to be treated, with the coated film being formed as the outermost layer,

Wherein with principal components being water and a film forming aid, 10 g of the aqueous coating agent is placed in an acrylic pipe having a height of 1 m and an inner diameter of 34 mm and a pressure in the acrylic pipe is reduced to form a foam, whose height is 400 mm or more.

FIG. 1

EP 2 392 444 A1

**Description**

The present invention relates to an aqueous coating agent for use in an in-mold coating process in which a coating agent is applied to the inner wall of a cavity within a mold to form a coated film, and a filler material is then injected into a gap between this coated film and an object to be treated, thereby forming a coat formed of the filler material on the surface of the object to be treated, with the coated film being formed as the outermost layer, and also relates to a film coated molded product obtained by in-mold coating using this aqueous coating agent.

In automobile steering wheel manufacturing methods for example, the core of the steering wheel is set in a mold cavity, and a resin material is injected into the mold cavity and cured to form a resin layer. Urethane resin is used as the resin material because of its superior tactile qualities, but it also has the drawback of yellowing due to poor light resistance, so a coated film must be formed on the surface of the urethane resin layer in order to make it light resistant.

One method that has been developed for forming an urethane resin layer with a coated film as the outermost layer is the so-called "in-mold coating" process, in which a coated film is formed first by applying a coating agent to the inner wall of the mold cavity, and urethane resin is then injected and cured in the gap between the core and the coated film (Patent Document 1).

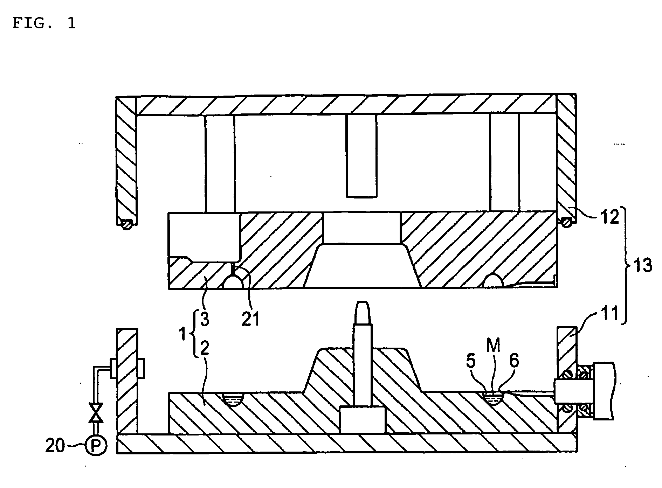

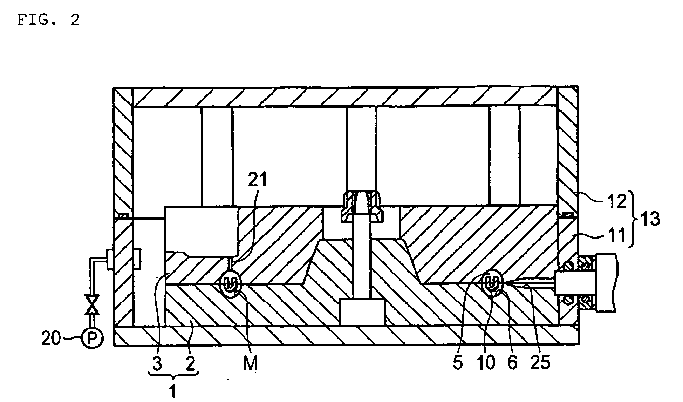

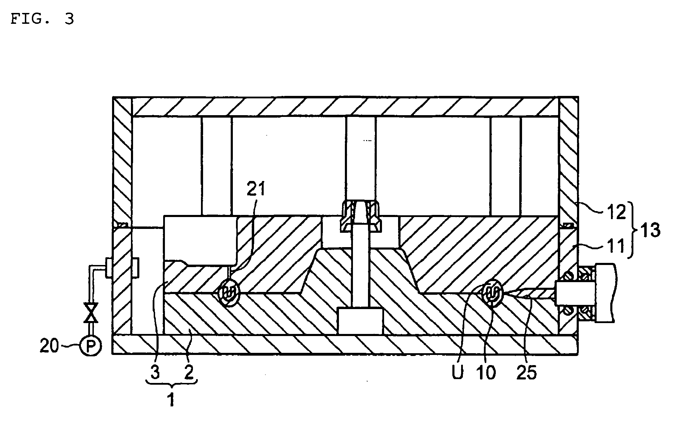

Specifically, a particular amount of coating agent M for forming the coated film is accumulated in cavity 5 of lower mold 2 of mold 1 as shown in Fig. 1, and steering wheel core 10 is set in cavity 2 and mold 1 is closed with upper mold 3 as shown in Fig. 2. Mold 1 is contained in box 13 comprising frame 11 and lid 12, and when box 13 is depressurized with vacuum pump 20, the inside of cavity 5 is depressurized via through hole 21. When the inside of cavity 5 is depressurized, the solvent of coating agent M boils, increases in volume and then defoams, and coating agent M is coated on inner wall 6 of cavity 5. Urethane resin is then injected into cavity 5 from injection nozzle 25, and the gap between steering wheel core 10 and the coated film of coating agent M formed on inner wall 6 of cavity 5 is filled wih urethane resin U as shown in Fig. 3. Urethane resin U is then cured, and mold 1 is opened to obtain a steering wheel comprising a urethane resin layer covered with a coated film of coating agent M.

Patent Document 1: Japanese Patent No. 3573013

However, in the method described in Patent Document 1, an organic solvent-based coating agent is used in order to achieve efficient boiling by depressurization, so disposal of the organic solvent is a problem. There is also a need for further improvements in the coated film properties.

It is therefore an object of the present invention to allow a satisfactory coated film to be formed by means of an in-mold coating process, and to solve the problem of organic solvent disposal.

As a result of exhaustive research aimed at achieving this object, the inventors in this case perfected the present invention after discovering that a good uniform coated film can be formed on the inner wall of a mold cavity by means of an in-mold coating process using an aqueous coating material if this material has a specific composition.

To achieve the aforementioned object, therefore, the present invention provides the following aqueous coating material.

(1) An aqueous coating material for use in an in-mold coating process in which a coating agent is applied to an inner wall of a cavity within a mold to form a coated film, and a filler material is then injected into a gap between this coated film and an object to be treated, thereby forming a coat formed of the filler material on a surface of the object to be treated, with the coated film being formed as the outermost layer, wherein with principal components being water and a film forming aid, 10 g of the aqueous coating agent is placed in an acrylic pipe having a height of 1 m and an inner diameter of 34 mm and a pressure in the acrylic pipe is reduced to form a foam, whose height is 400 mm or more.

(2) The aqueous coating agent according to (1) above, wherein the water and the film forming aid together constitute 70 to 97 mass% of the coating agent, with the remainder being solids.

(3) A film coated molded product that is in-mold coated under reduced pressure in use of the aqueous coating agent according to (1) or (2) above, wherein an elongation of said coated film is 50 to 400%, and a strength of said coated film is 70 to 200 kg/cm$^2$.

The aqueous coating agent includes an emulsion system (comprising an emulsifier added to polymer particles) and a dispersion system (comprising a dispersant added to polymer particles), and the resin component of the coating agent has the property of being separated by centrifugation.

The aqueous coating agent of the present invention is extremely foamable, and the resulting bubbles do not disappear immediately. The film obtained by in-mold coating therefore has increased thickness and excellent water resistance, light resistance, chemical resistance and other film properties, and can provide a film coated molded product having good surface properties, without craters or pinholes. Because water is used as the liquid for dispersing the resin component instead of an organic solvent, there is no problem of solvent disposal such as occurs with coating agents using organic solvents.

Fig. 1 is a drawing explaining an in-mold coating process.

Fig. 2 is a drawing explaining an in-mold coating process.

Fig. 3 is a drawing explaining an in-mold coating process.

Fig. 4 is an outline of a device used in the examples and comparative examples for measuring foam height.

Fig. 5 is a graph of the foam heights and solids content ratios shown in Table 2.

The aqueous coating agent of the present invention consists principally of water and a film foaming aid, and when 10 g of the aqueous coating agent is placed in an acrylic pipe having a height of 1 mand an inner diameter of 34 mm and the pressure in the acrylic pipe is reduced to form a foam, the height of the foam is 400 mm or more. A resin, a pigment, a leveling agent and other solid components are also included as materials forming the coating material. The details of each are explained below.

Acrylic resin, urethane resin, vinyl acetate resin, silicone resin and other resins conventionally used in coating agents can be used as the resin. Of these, an acrylic resin is desirable from the standpoint of film strength, light resistance and other properties. Examples of acrylic resins include acrylic resins obtained by copolymerizing polymerizable unsaturated carboxylic acid or its anhydride, an acrylic monomer other than (meth)acrylic acid or (meth)acrylic acid ester, and styrene, vinyl acetate or the like as necessary by a polymerization method such as emulsion polymerization, solution polymerization, bulk polymerization or the like. One such resin or a combination of 2 or more may be used.

As pigments, titanium oxide, carbon black, red ocher and other coloring pigments, baryta powder, precipitated barium sulfate, barium carbonate, calcium carbonate, calcium sulfate, clay, silica, white carbon, diatomaceous earth, talc, magnesium carbonate, alumina white, gloss white and other body pigments and various other pigments used conventionally in coating agents can be selected according to the desired color. The content of the pigment in the coating material is preferably 0.1 to 5 mass% or more preferably 0.5 to 3 mass%. If the content of the pigment is less than 0.1 mass% sufficient coloration is not obtained, while above 5 mass% color irregularities are more likely.

The film forming aid is one that has a higher boiling point than water, and can semi-dissolve the resin particles. With a higher boiling point than water, the coating agent can maintain a fluid state even after the water evaporates, and adhesion between resin particles is greater because they are semi-dissolved, resulting in a smoother coated film. In the present invention, N-methyl pyrrolidone, methyl cellosolve, carbitol, triethylene glycol, texanol and the like are desirable for obtaining such effects. Particularly, N-methyl pyrrolidone and methyl cellosolve are preferred. One such film forming aid may be used alone, or 2 or more may be combined. The content of the film forming aid in the coating agent is preferably 0.3 to 3 mass% or more preferably 0.5 to 2 mass%. If the content of the film forming aid is less than 0.3 mass% the coated film will not be made sufficiently smooth, while above 3 mass% the film thickness will be uneven.

The film forming aid together with water constitutes 65 to 98 mass% or preferably 70 to 97 mass% of the total coating agent.

The leveling agent is a component that promotes foaming of the coating agent and causes it to adhere properly to the inner wall of the cavity. In the present invention, silicon oil, silicon varnish, dimethyl siloxane, methyl polysiloxane polyalkyl oxide, perfluoroalkyl base-containing oligomers, polyoxyethylene alkyl ester, sorbitan alkyl ester, polyoxyethylene sorbitan alkyl ester, polyalkylene oxide-modified siloxane or the like is used. Of these, polyalkylene oxide-modified siloxane is preferred. One of these leveling agents may be used alone, or 2 or more may be combined. The content of the leveling agent in the coating agent is preferably 0.3 to 3 mass% or more preferably 0.5 to 2 mass%. If the content of the leveling agent is less than 0.3 mass% there is insufficient foaming and the coated film may not be formed in some places, while above 3 mass% there is too much foaming, causing uneven film thickness.

A water-soluble emulsifier can also be added to this water-based coating agent in place of part of the resin, pigment, film forming aid and leveling agent. Sodium alkyl sulfate, potassium alkyl sulfate and other alkyl sulfate salts, sodium alkylbenzene sulfonate, potassium alkylbenzene sulfonate and other alkylbenzene sulfonate salts, sodium dialkyl sulfosuccinic acid ester, potassium dialkyl sulfosuccinic acid ester and other alkyl sulfosuccinic acid esters and the like can be used as this water-soluble emulsifier. One such water-soluble emulsifier may be used, or 2 or more may be combined. The content of the water-soluble emulsifier in the coating agent is preferably 0.01 to 1 mass% or more preferably 0.05 to 0.5 mass%. Adding a water-soluble emulsifier increases the dispersibility of the resin powder and pigment, but adding more than 1 mass% does not further improve dispersibility, but instead detracts from the coated film because the contents of the resin, pigment, film forming aid and leveling agent are decreased proportionally.

Suitable amounts of plasticizers, humectants, anti-settling agents and various other additives commonly used in water-based coating agents can also be used as necessary in the water-based coating agent. However, these additives must be substituted for part of the resin, pigment, film forming aid, leveling agent and water-soluble emulsifier. A defoaming agent is not used because it negate the effect of the leveling agent.

The water-based coating agent of the present invention is specialized for in-mold coating, and is used in the film-forming process described above with reference to Figs. 1 to 3. Therefore, Patent Document 1 and the like can be consulted with respect to in-mold coating methods.

The object to be treated by coating need not be a steering wheel, and the process is also applicable to automobile instrument panels, console boxes, glove compartments, head rests, arm rests, door covers, spoilers, bumpers and other parts. It is also applicable to household electrical products and other molded products other than automobile parts.

The coated film has an elongation of 50% to 400% or preferably 150% to 200% and a strength of 70 to 200 kg/cm$^2$ or preferably 90 to 110 kg/cm$^2$. This elongation and strength of the coated film results in a molded product with excellent surface properties and durability. Within the more preferred range, a product can be prepared more stably.

Examples

The present invention is explained further below with reference to examples and comparative examples, but the present invention is not limited to these examples. In the examples and comparative examples below, percentages are mass percentages.

(Examples 1 to 8, Comparative Examples 1 to 4)

Water, a film forming aid and solid components (resin, pigment, leveling agent, emulsifier, defoaming agent and other components) were mixed in the proportions shown in Table 1 to prepare the aqueous coating agents shown in Table 1. The following were used as the film forming aid and solids components. A plasticizer, humectant and anti-settling agent were added as other components.

- Resin: Acrylic resin (Asahi Kasei "Polytron F2400"); coated film elongation 180%, coated film strength 100 kg
- Pigment: Carbon black (Dainichiseika "AF Black")
- Film forming aid: N-methyl pyrrolidone (Mitsubishi Chemical Corp. "NMP")
- Leveling agent: Polyether modified siloxane (BYK Chemie "BYK 347")
- Emulsifier: Disulfonic acid salt (Nippon Nyukazai Co. "Newcorl A-261A")
- Defoaming agent: Dimethylsiloxane (BYK Chemie "BYK024")

[Table 1]

|  | Ex 1 | Ex 2 | Ex 3 | Ex 4 | Ex 5 | Ex 6 | Ex 7 | Ex 8 |
|---|---|---|---|---|---|---|---|---|
| Water (%) | 70 | 75 | 80 | 85 | 85 | 90 | 92 | 97 |
| Solid components (%) | 30 | 25 | 20 | 16 | 15 | 10 | 8 | 3 |
| • Resin (%) | 21 | 17.5 | 14 | 10.5 | 10.5 | 7 | 5.6 | 2.1 |
| • Pigment (%) | 4.9 | 4.1 | 3.3 | 2.48 | 2.47 | 1.65 | 1.32 | 0.48 |
| • Other (%) | 1.5 | 1.25 | 0.99 | 1.72 | 0.88 | 0.55 | 0.42 | 0.1 |
| • Leveling agent (%) | 2.2 | 1.82 | 1.45 | 1.1 | 1.1 | 0.7 | 0.56 | 0.22 |
| • Emulsifier (%) | 0.4 | 0.33 | 0.26 | 0.2 | 0.05 | 0.1 | 0.1 | 0.1 |
| • Defoaming agent (%) | 0 | 0 | 0 | 0 | 0 | 0 | 0 | 0 |
| Film forming aid (%) | 1.9 | 1.9 | 1.9 | 1.9 | 1.9 | 1.9 | 1.9 | 1.9 |
|  |  |  |  |  |  |  |  |  |
|  | Comp. Ex. 1 | | Comp. Ex. 2 | | Comp. Ex. 3 | | Comp. Ex. 4 | |
| Water (%) | 85 | | 85 | | 65 | | 65 | |
| Solids (%) | 15 | | 15 | | 35 | | 35 | |
| • Resin (%) | 10.5 | | 10.5 | | 24.5 | | 24.5 | |
| • Pigment (%) | 2.47 | | 2.47 | | 5.9 | | 5.9 | |
| • Other (%) | 0.23 | | 1.83 | | 1.58 | | 1.15 | |

(continued)

|  | Comp. Ex. 1 | Comp. Ex. 2 | Comp. Ex. 3 | Comp. Ex. 4 |
|---|---|---|---|---|
| • Leveling agent (%) | 1.1 | 0 | 2.55 | 2.55 |
| • Emulsifier (%) | 0.2 | 0.2 | 0.47 | 0.4 |
| • Defoaming agent (%) | 0.5 | 0 | 0 | 0.5 |
| Film forming aid (%) | 1.9 | 1.9 | 1.9 | 1.9 |

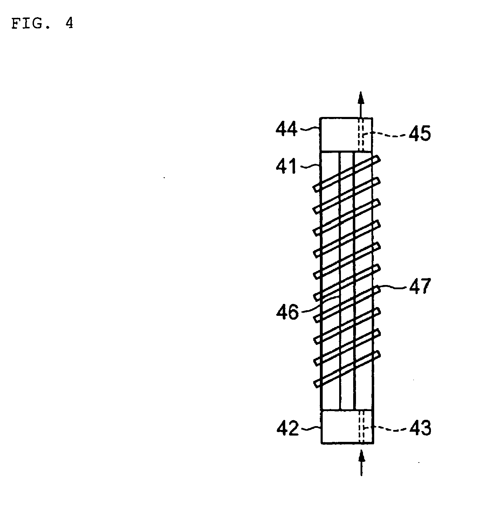

The foam heights of the resulting aqueous coating agents were measured using a foam height measurement device equipped with a transparent acrylic pipe having an inner diameter of 34 mm, an outer diameter of 40 mm and a height of 1000 mm as shown in Fig. 4. In Fig. 4, 41 is a transparent acrylic pipe, 42 is a bottom member, 43 is the supply port for the coating agent sample, 44 is a top member, 45 is a discharge port connected to a vacuum pump, 46 is an iron pipe with an outer diameter of 13 mm disposed in the center of the transparent acrylic pipe, and 47 is a transparent warm water circulation hose. Transparent warm water circulation hose 47 is made of vinyl chloride or the like, has an outer diameter of 10 mm and an inner diameter 8 mm, and is coiled around transparent acrylic pipe 41 so that it circles the pipe at intervals of about 2 cm in the lengthwise direction.

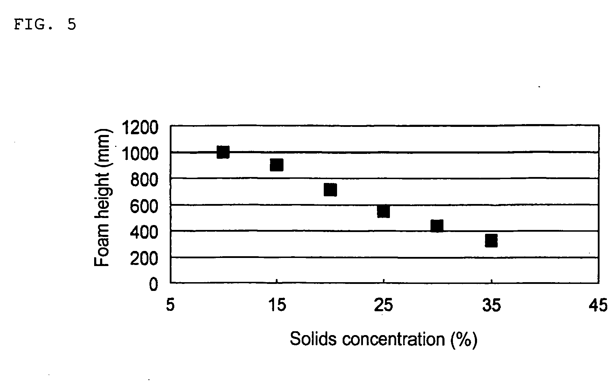

Warm water at 60°C was circulated through transparent water hose 47 as transparent pipe 41 was depressurized with a vacuum pump to about 0.101 MPa (absolute pressure), gauge pressure about -0.09 MPa, after which 10 g of coating agent sample was injected into transparent acrylic pipe 41, and acrylic pipe 41 was plugged after injection of the coating agent sample. The temperature of the inner surface of the acrylic pipe was estimated to be about 25 to 35°C at this point. The coating agent then immediately foamed due to degassing and expansion of gas contained in the coating agent solution in the pipe, and the height of the foam in this case (foam height) was measured. The measurement results are shown in Table 2 and Fig. 5. Table 2 also shows solids content percentages.

[Table 2]

Table 2

| Solids concentration (%) | Foam height (mm) |
|---|---|
| 10 | 1000 |
| 15 | 910 |
| 20 | 720 |
| 25 | 550 |
| 30 | 440 |
| 35 | 330 |

It can be seen that the higher the solids content percentage of the sample, the greater the viscosity of the coating agent. As shown in Fig. 5, when the solids content percentage exceeds 30%, the foam height drops rapidly to 400 mm or less, and the foam height also drops when a defoaming agent is added, and when a leveling agent is not added. It was confirmed that in the examples conforming to the present invention, the foam height was high, and good, uniform coated films was formed.

Coated film elongation and strength were also measured by the following test methods. The results are shown in Table 3.

(1) Preparation of test pieces

Commercial release paper was laid over a test plate, and the sample was applied to the paper so as not to form bubbles, and dried for 2 weeks. After drying, this was inverted on the release paper and kept dry for 7 days, and then the coated film was peeled off the release paper to obtain a free coated film. After the free coated film was confirmed to have no warpage and no pinholes appearing under natural light, it was molded into a dumbbell shape as stipulated in JIS K6301 (methods for physical testing of vulcanized rubber) to prepare the test piece.

(2) Measurement

(i) The thickness of the test pieces is measured at multiple locations, and the minimum value is given as the thickness.
(ii) The test piece is punched out, and the width was given as the width of the test piece.
(iii) Gauge lines are drawn at a distance of 20 cm from the center of the test piece.
(iv) The test piece is attached to a tensile tester with a distance of 60 mm between chucks, force is applied at a fixed speed, and the load P at breakage and distance L between gauge lines are measured.
(v) Coated film elongation is then calculated by Formula (1), and coated film strength T by Formula (2).

$$E(\%) = [(L - 20) \times 100]/20 \quad \text{......} \quad (1)$$

$$T\ (kg/cm^2) = P/A \quad \text{......} \quad (2)$$

(A = cross-sectional area of test piece (B x C)/100, B = length of test piece, C = width of test piece).

The values for the products of the invention were E = 150 to 200%, T = 90 to 110 kg/cm$^2$. Thus, the test pieces of the examples conforming to the present invention had excellent elongation and strength.

The present invention was explained in detail and with reference to specific embodiments, but clearly a person skilled in the art could make various changes and modifications without deviating from the spirit or scope of the present invention.

The priority claim for this application is based on Japanese Patent Application 2009-021359 dated February 2, 2009, and the contents of that application are incorporated herein by reference.

The present invention is useful for manufacturing automobile steering wheels, instrument panels, console boxes, glove compartments, head rests, arm rests, door cover, spoilers, bumpers and the like for example.

| | |
|---|---|
| M | Coating agent |
| U | Urethane resin |
| 1 | Mold |
| 2 | Lower mold |
| 3 | Upper mold |
| 5 | Cavity |
| 6 | Inner wall |
| 10 | Core |
| 13 | Box |
| 20 | Vacuum pump |
| 25 | Injection nozzle |
| 41 | Transparent acrylic pipe |
| 42 | Bottom member |
| 43 | Coating agent sample supply port |
| 44 | Top member |
| 45 | Discharge port attached to vacuum pump |
| 46 | Iron pipe |
| 47 | Transparent warm water circulation hose |

**Claims**

1. An aqueous coating material for use in an in-mold coating process in which a coating agent is applied to an inner wall of a cavity within a mold to form a coated film, and a filler material is then injected into a gap between this coated film and an object to be treated, thereby forming a coat formed of the filler material on a surface of the object to be treated, with the coated film being formed as the outermost layer, wherein

with principal components being water and a film forming aid, 10 g of the aqueous coating agent is placed in an acrylic pipe having a height of 1 m and an inner diameter of 34 mm and a pressure in the acrylic pipe is reduced to form a foam, whose height is 400 mm or more.

2. The aqueous coating agent according to Claim 1,
   wherein the water and the film forming aid together constitute 70 to 97 mass% of the coating agent, with the remainder being solids.

3. A film coated molded product that is in-mold coated under reduced pressure in use of the aqueous coating agent according to Claim 1 or 2, wherein
   an elongation of said coated film is 50 to 400%, and a strength of said coated film is 70 to 200 kg/cm$^2$.

FIG. 1

FIG. 2

FIG. 3

FIG. 4

FIG. 5

**INTERNATIONAL SEARCH REPORT**

International application No.

PCT/JP2010/051419

A. CLASSIFICATION OF SUBJECT MATTER
*B29C45/16*(2006.01)i, *C09D5/02*(2006.01)i, *C09D7/12*(2006.01)i, *C09D201/00*
(2006.01)i

According to International Patent Classification (IPC) or to both national classification and IPC

B. FIELDS SEARCHED

Minimum documentation searched (classification system followed by classification symbols)
B29C45/00-45/84, B29C39/00-39/44, B29C33/00-33/76, C09D1/00-10/00,
C09D101/00-201/10

Documentation searched other than minimum documentation to the extent that such documents are included in the fields searched
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2001-96579 A (Toyoda Gosei Co., Ltd.),<br>10 April 2001 (10.04.2001),<br>claims; paragraphs [0027] to [0029], [0055];<br>fig. 1 to 4<br>& EP 1088648 A1<br>claims; paragraphs [0034] to [0035], [0110];<br>fig. 1 to 4<br>& DE 60007050 T       & CN 1289694 A | 1-3 |
| Y | JP 2008-195857 A (Fujikura Kasei Co., Ltd.),<br>28 August 2008 (28.08.2008),<br>claims; paragraphs [0021], [0025]<br>& EP 1958995 A2<br>claims; paragraphs [0043] to [0044], [0051] to<br>[0052] | 1-3 |

☐ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>23 March, 2010 (23.03.10) | Date of mailing of the international search report<br>06 April, 2010 (06.04.10) |
|---|---|
| Name and mailing address of the ISA/<br>Japanese Patent Office | Authorized officer |
| Facsimile No. | Telephone No. |

Form PCT/ISA/210 (second sheet) (July 2009)

**REFERENCES CITED IN THE DESCRIPTION**

**Patent documents cited in the description**

- JP 3573013 B

- JP 2009021359 A